Europäisches Patentamt

European Patent Office

Office européen des brevets

(11) Publication number: **0 056 507**
**B1**

(12) **EUROPEAN PATENT SPECIFICATION**

(45) Date of publication of patent specification: **12.06.85**

(21) Application number: **81300211.0**

(22) Date of filing: **19.01.81**

(51) Int. Cl.⁴: **G 03 B 15/08, G 09 B 21/00**

(54) Apparatus and method for creating visual images of lip movements.

<table>
<tr><td>(43) Date of publication of application:<br><b>28.07.82 Bulletin 82/30</b></td><td>(73) Proprietor: <b>Bloomstein, Richard Welcher<br>1443 Cavell<br>Highland Park Illinois 60035 (US)</b></td></tr>
<tr><td>(45) Publication of the grant of the patent:<br><b>12.06.85 Bulletin 85/24</b></td><td>(72) Inventor: <b>Bloomstein, Richard Welcher<br>1443 Cavell<br>Highland Park Illinois 60035 (US)</b></td></tr>
<tr><td>(84) Designated Contracting States:<br><b>DE FR GB IT</b></td><td>(74) Representative: <b>Evershed, Michael et al<br>Marks & Clerk Alpha Tower Suffolk Street<br>Queensway<br>Birmingham B1 ITT (GB)</b></td></tr>
<tr><td>(56) References cited:<br><b>US-A-3 639 691<br>US-A-3 662 374</b><br><br><b>BRITISH KINEMATOGRAPHY SOUND AND<br>TELEVISION, vol.53, no. 12, December 1971 A.<br>KITCHING: "Computer Animation: Answer or<br>Problem?" pages 436 to 441</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an apparatus and a method for creating visual images of lip movements corresponding to supplied speech sounds. The invention is particularly suitable for creating visual images of lip movements in films, video tapes, and on other recorded media.

In the production of many types of audio-visual media the speed sounds and the visual images are recorded simultaneously. For example, in the making of motion pictures or the like audio visual recordings, the voice of the actor is recorded on the sound track at the same time that the actor is emitting speech sounds. Where the film intended to be played as originally produced, the speech sounds of the sound track correspond to the lip movements emitted. However, it frequently happens that the audio portion or sound track is to be in a language other than the original one spoken by the actor. Under such circumstances a new sound track in another language is "dubbed in". When this is done the speech sounds do not correspond to the lip movements, resulting in an audio-visual presentation that looks unreal or inferior.

In animated cartoons it is also a problem to provide lip movements which correspond to the speech sound. This may be done, however, by utilizing individual art work or drawings for the lip movements, sometimes as many as several per second. Because of the necessity of making numerous drawings by hand or other laborious art techniques, the cost of animated cartoons tends to be expensive.

In US—A—3662374 there is described an apparatus for creating lip movements in response to speech sounds. In this apparatus, the speech sounds are categorized according to their frequency created in a spectrum analyser and the output of the analysis is used to directly control mouth width and upper and lower lip movements. Because the output of the analysis is used to directly control lip movements, only a limited range of lip movements may be produced.

It is an object of this invention to provide an apparatus and a method for creating visual image of a wide range of lip movements in response to supplied speech sounds.

According to one aspect of this invention there is provided a method of creating visual images of lip movements corresponding to supplied speech sounds, said method comprising providing a coded representation of said supplied speech sounds, generating graphic data for lip movements corresponding to said supplied speech sounds, and transmitting said generated graphic data to a graphic output device so as to combine the lip movements with a visual image in a predetermined manner on an audio-visual medium, and characterized in that the method includes transmitting the coded representation of the supplied speech sounds to a data memory device in which there is already stored a set of coded speech data representing a set of speech sounds and a set of coded graphic data for creating lip movements and which corresponds to said set of coded speech data, and causing the data memory device to generate said graphic data which corresponds to the supplied speech sounds under the control of the coded representation of said supplied speech sounds.

According to another aspect of this invention there is provided an apparatus for creating visual images of lip movements corresponding to supplied speech sounds, said apparatus comprising means for providing a coded representation of the supplied speech sounds, a graphical output device, and means for transmitting graphic data for lip movements corresponding to said supplied speech sounds to said graphical output device, characterized in that said means for transmitting graphic data comprises a data memory device which receives the coded representation of the supplied speech sounds and in which there is stored a set of coded speech data representing a set of speech sounds and a set of coded graphic data for creating lip movements and which corresponds to said set of coded speech data, said data memory device generating the graphic data corresponding to the supplied speech sounds under the control of the coded representation of the supplied speech data.

With a motion picture film having a "dubbed-in" sound track in which lip movements are not in correspondence with the speech sounds, the encoding of the lip movements may be done on a frame-by-frame basis. Thus, the coded speech sounds may be extracted from the sound track, frame-by-frame, and sent to the memory device which may be a computer. Likewise, the computer may receive information as to the mouth position on each frame as well as information relating to the mouth shape of the actor. The entire film may be optically scanned by a frame-by-frame basis so that each frame with mouth location and mouth configuration data may be stored in the computer in digital form along with data in digital form as to the analyzed speech sounds. When the information is set out from the computer to the graphical output device, the data for the speech sounds causes the computer to send out the proper graphical output signals to the graphical output device corresponding to the particular speech sounds on the sound track of the film. Thus, the film is reconstructed to the extent necessary to change the mouth shape and lip movement or configuration to correspond with the speech sound.

This invention will now be described in more detail by way of example with reference to the drawings in which:—

Figure 1 is a diagram showing the arrangement for storing of phoneme and graphic codes and forming part of the present invention;

Figure 2 is a diagram showing the manner of using the codes to display visual images;

Figure 3 is a modified form of the invention showing the encoding of lip movement corrections; and

Figure 4 is a diagram showing an arrangement for graphically displaying the lip movement corrections encoded by the arrangement of Figure 3.

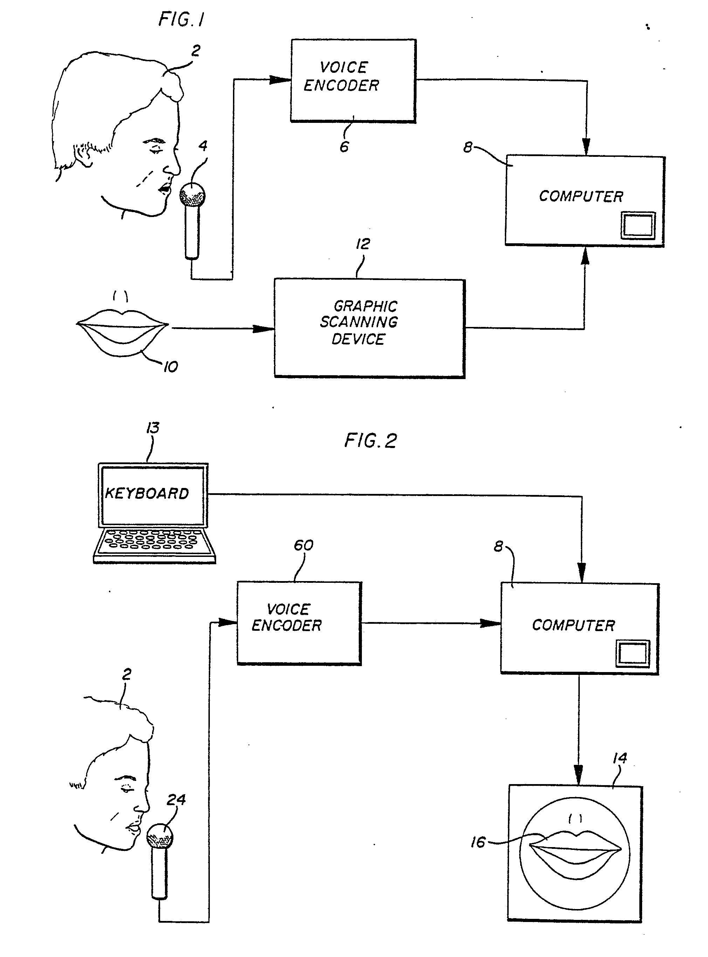

Referring now in more detail to the drawings, and particularly to Figure 1, there is shown an arrangement for storing phoneme and graphic codes into a digital electronic computer. One set of codes represents the spoken phoneme of a language (e.g. the English language). The other codes are graphic codes representing visual images of lips of various mouth types such as male, female, cartoon animal, etc. together with orientations of the mouth such as front view, three quarter view, side view, etc.

More particularly, a person such as an actor pronounces phoneme into a voice encoder. The voice encoder translates the phoneme into a digital electronic phoneme code which is transmitted to a digital computer and stored in its memory. A phoneme for entire language may be thus be digitally coded. In conjunction with the phoneme code an artist may draw one or more mouth shapes. A programmer or electronic graphic scanning device encodes the artist's drawing into graphic code, which code is also sent for storage into the electronic digital computer. The foregoing is repeated until a complete set of phoneme and graphic codes are stored in digital form representing the basic phoneme code, standard mouth types and orientations, etc. as heretofore stated.

A phoneme code is a representation of intensities of sound over a specified series of frequencies. The number of frequencies selected depends upon the degree of refinement of the code. Typically, three frequencies may be used to obtain three intensities (decibel level), one for each frequency. The English language has sixty-two phonemes. Thus, each of the sixty-two phonemes will be coded at three selected frequencies. A discussion of voice analysis may be found in the publication *Interface Age*, issue of May 5, 1977, pages 56—67.

Thus, an actor 2, speaking into a microphone 4 transmits phoneme to a voice encoder 6, which digitally encodes the phoneme and transmits the encoded data to a data memory device 8. This data memory device may be any known type of electronic digital computer. An example is the model PDP-11/40 of Digital Equipment Corporation, Maynard, Massachusetts. An artist may produce a drawing 10 of a particular lip or mouth shape. This drawing 10 may be graphically encoded by the programmer or electronic graphic scanning device 12. This unit may be of the type described in United States Patent 3,728,576 and is basically an optical· scanner which encodes the artist's drawing into a graphic digital code for transmission to the computer 8.

The voice encoder 6, previously referred to, is sometimes known as a speech encoder and is a known piece of equipment. Such a device is sold under the trademark SPEECH LAB and is obtainable from Heuristics, Inc. of Los Altos, California. The voice encoder 6 is a device which translates the phoneme into a digital electronic phoneme code.

The artist will draw as many mouth or lip shapes 10 as may be necessary to encode the computer 8 with a complete phoneme language code and all of the mouth or lip shapes which may be needed for subsequent graphical reproduction.

Referring now to Fig. 1, there is shown the output or playback mode of the present invention. A keyboard 13 is used to select a mouth type (male, female, etc.) orientation front, three-quarter, side, etc. from among the previously encoded lip or mouth shapes. The keyboard is of a known type and may be, for example, a DEC LA 36 DECWRITER II and/or VT 50 DECSCOPE, products of Digital Equipment Corporation. The keyboard 13 is connected to the computer 8 so that the mouth type, mouth orientation, etc. may be chosen by keying in the desired selection.

The actor 2 speaking in the microphone 24 reads a script or other voice material into the voice encoder 60 which is similar to the voice encoder 6 previously described. The voice encoder 60 translates the actor's voice into a digital electronic voice code. The output of the encoder 60 is transmitted to the computer 8. Under the control of the keyed-in signal from the keyboard 13 and of the encoded output of the voice encoder 60, the data memory device or computer 8 sends to display device 14 signals corresponding to the selected graphic code from its memory and also the phoneme code which most closely matches the actor's encoded voice. This display device 14 converts the graphic codes and size information into visual information such as the lip shape 16 shown. The visual images 16 can be recorded on film or other audio/visual media. For example, visual images may be enlarged into framed transparencies for overlay into compounded frames.

Thus, the playback mode of the present arrangement shown in Fig. 2 allows a simple selection of mouth orientation and related mouth characteristics to be simply keyed into the computer which has the various mouth information stored therein. At the same time the voice of the actor 2 may be encoded to provide an input signal to the computer causing it to produce a phoneme output most nearly in accordance with the coded signals. As a result, the output from the computer 8 to the graphic display 14 is controlled by the keyboard input from the keyboard 13 and the output from the voice encoder 60, the latter of which determines the lip configuration shown in the graphic display 16. Thus, if the actor pronounces an "ah"sound into the microphone 24, the coded input signal to the computer 8 will find or select the nearest phoneme code in accordance with known data comparison techniques. This code will then be used to provide a predetermined output to display device 14 that will result in an "ah" shaped lip configuration in display 16.

The graphic display device 14 is itself a known item and may, for example, be a RAMTEK G-100-A color display system, sold by Ramtek Corporation of Sunnydala, California.

It is possible to overlay directly the constructed visual image 16 onto an existing film or other audio-visual medium automatically. In such procedure the original film is converted by an electronic graphic scanning device, such as is shown at 12 in Fig. 1 and previously described, into what is known as "pixels". These are electronic digital codes representing the light intensity at a large number of points on the screen. The "pixels" are analyzed by an electronic digital computer by various algorithms to determine the size, orientation and/or location of features (in this case the mouth). The pixels in the local region of the located mouth can be replaced in the electronic digital computer memory by existing computer instructions of graphic codes from the sets of phoneme graphic codes stored previously therein and selected by the arrangement shown and described with respect to Fig. 2. The resulting pixels representing the original frame with mouth replaced can be sent to an electronic graphic display device for display and recording.

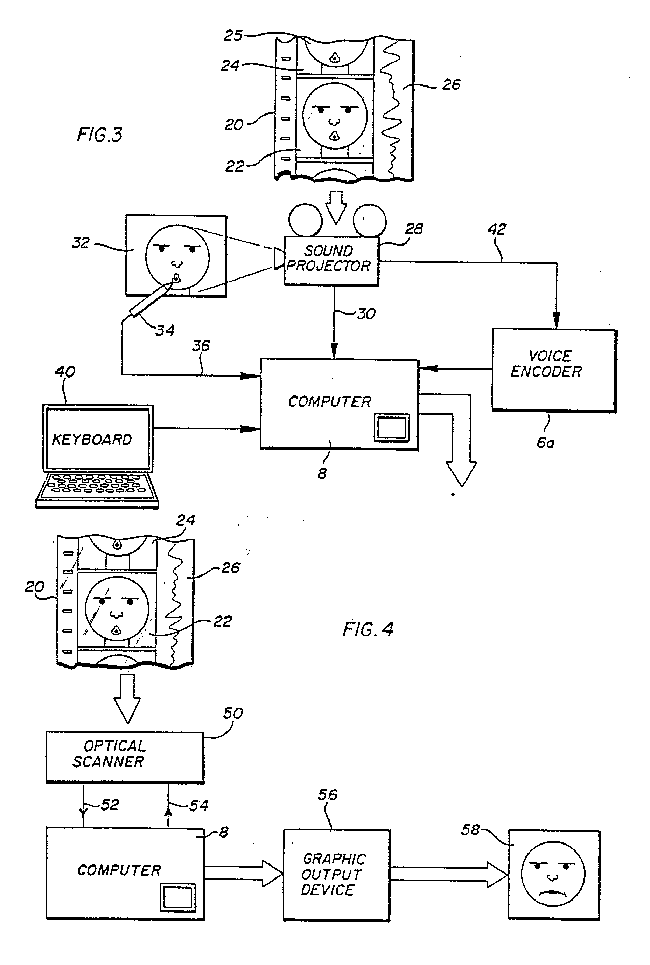

Fig. 3 and Fig. 4 shows a modified form of the invention which may be used for correcting the lip movements in motion picture film. Fig. 3 shows a motion picture film 20 having a series of frames 22, 24 etc. that include a visual image 25 and a sound track 26. The sound of the sound track may be a foreign language dubbed in, resulting in a sound which does not correspond to the lip movements in the various frames. Accordingly, the film 20 may be run through a sound projector 28 that embodies a frame counter that sends frame count output pulses over conductor 30 to the digital memory device or computer 8. The sound projector 28 also projects an image 32 on a suitable screen. This screen may be a so-called inter-active graphic tablet. A stylus 34 is used in a known fashion to select the mouth position relative to coordinates on the graphic tablet 32. The stylus 34 records the position of the mouth as a digital code and in accordance with known techniques transmits the information over a conductor 36 for storage into the computer 8. If needed, a keyboard 40 is also utilized whereby data representing a mouth type or other configuration may be transmitted to the computer 8.

An encoder 6a may also be used and is of the type similar to the encoder 6 previously described. This encoder transmits the digital phoneme into the computer 8. Furthermore, the output sound from the projector as an electrical signal is transmitted over conductor 42 to the encoder 6a, such electrical signal representing the output sound from the sound track 26.

Thus, the digital computer 8 has stored therein considerable data in coded form. This data consists of the frame counts, the mouth position, the phoneme code, and the mouth type.

Turning now to Fig. 4, the playback or output arrangement is shown. The images 25 of frames 22, 24 etc. are scanned by a conventional optical scanner 50 which sends a digitally coded image for each frame over conductor 52 to the computer 8. At the same time a pulse advance is supplied over conductor 54 to advance the frame of the film. The output signal from the digital computer 8 is sent to a graphic output device 56 which provides a graphic display 58 that has the new lip movements thereon. Thus, the arrangement provided for the encoding of the sound from the sound track 26 and utilizing that data to create a new lip configuration corresponding to the sound of the sound track. The graphic display 58 may be recombined with the sound in the form of a new film, videotape, or the like.

## Claims

1. A method of creating visual images of lip movements corresponding to supplied speech sounds, said method comprising providing a coded representation of said supplied speech sounds, generating data for lip movements corresponding to said supplied speech sounds, and transmitting said generated graphic data to a graphic output device so as to combine the lip movements with a visual image in a predetermined manner on an audio-visual medium, and characterized in that the method includes transmitting the coded representation of the supplied speech sounds to a data memory device in which there is already stored a set of coded speech data representing a set of speech sounds and a set of coded graphic data for creating lip movements and which corresponds to said set of coded speech data, and causing the data memory device to generate said graphic data which corresponds to the supplied speech sounds under the control of the coded representation of said supplied speech sounds.

2. A method according to claim 1 further characterized in that said lip movements are applied to provide correct lip movements that are in accordance with the supplied speech sounds.

3. A method according to claim 2 further characterized in extracting the supplied speech sounds from a series of frames of audio and visual information, and storing the coded representation of said supplied speech sounds in said data memory device on a frame-by-frame basis.

4. A method according to claim 3 further characterized in optically scanning said series of frames in sequence to provide data representing an encoded graphical image of the visual information and transmitting the encoded graphical image data to said data memory device, and transmitting from said data memory device to said graphical output device the encoded graphical image data and the generated graphic data for the lip movements.

5. A method according to claim 1 or claim 2, further characterized in applying said lip movements to a motion picture film.

6. An apparatus for creating visual images of lip movements corresponding to supplied speech sounds, said apparatus comprising means (60; 6a) for providing a coded representation of the supplied speech sounds, a graphical output device (14; 56), and means (8) for transmitting graphic data for lip movements corresponding to said supplied speech sounds to said graphical output device (14; 56), characterized in that said means for transmitting graphic data comprises a data memory device (8) which receives the coded representation of the supplied speech sounds and in which there is stored a set of coded speech data representing a set of speech sounds and a set of coded graphic data for creating lip movements and which corresponds to said set of coded speech data, said data memory device (8) generating the graphic data corresponding to the supplied speech sounds under the control of the coded representation of the supplied speech data.

7. Apparatus according to claim 6, characterized in that the apparatus includes means (28) for extracting speech sounds from a series of frames of audio and visual information, said extracted speech sounds being supplied to said means (60; 6a) for providing a coded representation of the supplied speech sounds and the coded representation being supplied to the data memory device (8) on a frame-by-frame basis for storage therein on said basis, and means (50) for optically scanning said series of frames in sequence to provide an encoded graphical image of the visual information.

**Patentansprüche**

1. Verfahren zur Erzeugung von visuellen Lippenbewegungsbildern, die zugeführten Sprachlauten entsprechen, wobei in dem Verfahren eine kodierte Darstellung der zugeführten Sprachlaute geschaffen wird, graphische Daten für Lippenbewegungen entsprechend den zugeführten Sprachlauten erzeugt werden, und die erzeugten graphischen Daten einer Graphikausgabevorrichtung übermittelt werden, um die Lippenbewegungen mit einem visuellen Bild in vorbestimmter Weise in einem audiovisuellen medium zu kombinieren, dadurch gekennzeichnet, daß bei dem Verfahren die kodierte Darstellung der zugeführten Sprachlaute einer Datenspeichervorrichtung übermittelt wird, in der bereits ein Satz kodierter Sprachdaten, der einen Satz SPrachlaute darstellt, und ein Satz kodierter graphischer Daten gespeichert ist, um Lippenbewegungen entsprechend dem Satz kodierter Sprachdaten zu erzeugen, und daß die Datenspeichervorrichtung veranlaßt wird, graphische Daten entsprechend den zugeführten Sprachlauten unter Steuerung durch die Kodierte Darstellung der zugeführten Sprachlaute zu erzeugen.

2. Verfahren nach Anspruch 1, dadurch gekennzeichnet, daß die Lippenbewegungen angewandt werden, um korrigierte Lippenbewegungen zu schaffen, die in Übereinstimmung mit den zugeführten Sprachlauten sind.

3. Verfahren nach Anspruch 2, gekennzeichnet durch eine Herausziehen der zugeführten Sprachlaute aus einer Bilderreihe aus audiovisueller Information und das Speichern der kodierten Darstellung der zugeführten Sprachlaute in der Datenspeichervorrichtung auf Tonbild-nach-Tonbild-Grundlage.

4. Verfahren nach Anspruch 3, gekennzeichnet durch optisches Abtasten der Bilderreihe nacheinander zur Schaffung von Daten, die ein kodiertes graphisches Bild der visuellen Information darstellen, und Übermittlung der kodierten graphischen Bild-Daten an die Datenspeichervorrichtung und Übermittlung der kodierten graphischen Bild-Daten und der erzeugten graphischen Daten der Lippenbewegungen aus der Datenspeichervorrichtung an die Graphikausgabevorrichtung für die Lippenbewegungen.

5. Verfahren nach Anspruch 1 oder 2, gekennzeichnet durch Anwendung der Lippenbewegungen bei einem Film.

6. Vorrichtung zur Erzeugung von visuellen Lippenbewegungsbildern, die zugeführten Sprachlauten entsprechen, wobei die Vorrichtung eine Einrichtung (60; 6a) zum Schaffen einer kodieren Darstellung der zugeführten Sprachlaute, eine Graphikausgabevorrichtung (14; 56), und eine Einrichtung (8) zum Übermitteln der graphischen Daten der Lippenbewegungen, die den zugeführten Sprachlauten entsprechen, an die Graphikausgabevorrichtung (14; 56) aufweist, dadurch gekennzeichnet, daß die Einrichtung zum Übertragen der graphischen Daten eine Datenspeichervorrichtung (8) aufweist, die die kodierte Darstellung der zugeführten Sprachlaute empfängt und in der ein Satz kodierter Sprachdaten, der einen Satz aus Sprachlauten darstellt, und ein Satz aus kodierten graphischen Daten gespeichert ist, um Lippenbewegungen entsprechend dem Satz der kodierten Sprachdaten zu erzeugen, und daß die Datenspeichervorrichtung (8) die graphischen Daten erzeugt, die den zugeführten Sprachlauten entspechen, unter Steuerung durch die kodierte Darstellung der zugeführten Sprachlaute.

7. Vorrichtung nach Anspruch 6, dadurch gekennzeichnet, daß die Vorrichtung eine Einrichtung (28) zum Herausziehen der Sprachlaute aus einer Bilderreihe aus audiovisueller Information aufweist, daß die herausgezogenen Sprachlaute der Einrichtung (60; 6a) zum Schaffen der kodierten Darstellung der zugeführten Sprachlaute zugeführt werden, daß die kodierte Darstellung der Datenspeichervorrichtung (8) Tonbild nach Tonbild auf dieser Basis zum Speichern auf dieser Grundlage zugeführt werden, und daß eine Einrichtung (50) zum optischen Abtasten der Bilderfolge nacheinander vorgesehen ist, um ein kodiertes graphisches Bild der visuellen Information zu liefern.

**Revendications**

1. Procédé de création d'images visuelles de mouvements des lèvres correspondant à des sons de parole fournis, ce procédé comprenant l'établissement d'une représentation codée des sons de parole fournis, la génération de données graphiques pour des mouvements des lèvres correspondant aux sons de parole fournis, et la transmission de ces données graphiques à un dispositif de sortie graphique, de façon à combiner les mouvements avec une image visuelle, d'une manière prédéterminée, sur un support d'enregistrement audio-visuel, et caractérisé en ce qu'il comprend la transmission de la représentation codée des sons de parole fournis vers un dispositif de mémoire de données dans lequel sont déjà enregistrés un ensemble de données de parole codées représentant un ensemble de sons de parole, et un ensemble de données graphiques codées destiné à la création de mouvements des lèvres et qui correspond à l'ensemble de données de parole codées, et la mise en oeuvre du dispositif de mémoire de données de façon qu'il engendre les données graphiques qui correspondent aus sons de parole fournis, sous la commande de la représentation codée des sons de parole fournis.

2. Procédé selon la revendication 1, caractérisé en outre en ce que les mouvements des lèvres sont appliqués de façon à donner des mouvements des lèvres corrects, conformes aux sons de parole fournis.

3. Procédé selon la revendication 2, caractérisé en outre par l'extraction des sons de parole fournis à partir d'une série d'images d'une information audio et visuelle, et l'enregistrement de la représentation codée des sons de parole fournis dans le dispositif de mémoire de données, en procédant image par image.

4. Procédé selon la revendication 3, caractérisé en outre en ce qu'on effectue une analyse optique de la série d'images, séquentiellement, pour produire des données représentant une image graphique codée de l'information visuelle, et on transmet les données d'image graphiques codées vers le dispositif de mémoire de données, et on transmet, du dispositif de mémoire de données vers le dispositif de sortie graphique, les données d'image graphiques codées et les données graphiques engendrées pour les mouvements des lèvres.

5. Procédé selon la revendication 1 ou la revendication 2, caractérisé en outre en ce qu'on applique lesdits mouvements des lèvres à un film de cinéma.

6. Appareil pour la création d'images visuelles de mouvements des lèvres correspondant à des sons de parole fournis, cet appareil comprenant des moyens (60; 6a) destinés à produire une représentation codée des sons de parole fournis, un dispositif de sortie graphique (14; 56), et des moyens (8) pour transmettre vers le dispositif de sortie graphique (14; 56) des données graphiques pour les mouvements des lèvres qui correspondent aux sons de parole fournis, caractérisé en ce que les moyens de transmission de données graphiques comprennent un dispositif de mémoire de données (8) qui reçoit la représentation codée des sons de parole fournis, et dans lequel sont enregistrés un ensemble de données de parole codées représentant un ensemble de sons de parole, et un ensemble de données graphiques codées destiné à la création de mouvements des lèvres et qui correspond à l'ensemble de données de parole codées, ce dispositif de mémoire de données (8) engendrant les données graphiques qui correspondent aux sons de parole fournis sous la commande de la représentation codée des données de parole fournies.

7. Appareil selon la revendication 6, caractérisé en ce qu'il comprend des moyens (28) destinés à extraire des sons de parole à partir d'une série d'images d'information audio et visuelle, ces sons de parole extraits étant appliqués auxdits moyens (60; 6a) destinés à produire une représentation codée des sons de parole fournis, et la représentation codée étant appliquée image par image au dispositif de mémoire de données (8) pour être enregistrée dans celui-ci image par image, et des moyens (50) destinés à analyser, séquentiellement, de façon optique la série d'images, pour produire une image graphique codée correspondant à l'information visuelle.

FIG.1

FIG.2

FIG.3

FIG. 4